# FASCICULE DE BREVET EUROPEEN

(11) **EP 0 457 239 B1**
(45) Date de publication et mention de la délivrance du brevet: **24.07.1996**
(21) Numéro de dépôt: 91107715.4
(22) Date de dépôt: 13.05.1991
(51) Int. Cl.: G06F 9/44

(54) **Structure d'automate de traitement de données**
Struktur eines datenverarbeitenden Automaten
Structure of data processing automaton

(30) Priorité: 16.05.1990 FR 9006114
(43) Date de publication de la demande: 21.11.1991
(73) Titulaire: ALCATEL CIT, F-75008 Paris (FR)
(72) Inventeur: Larousse, Roger, F-91940 Les Ulis (FR)
(74) Mandataire: Weinmiller, Jürgen

(56) Documents cités:
- EP-A- 0 228 053
- ELECTRICAL COMMUNICATION, vol. 54, no. 3, 1979, pages 199-204; A. GARDINER et al.: "ITT 1230 digital exchange - Software design for digital exchanges"

## Description

La présente invention concerne une structure d'automate de traitement de données.

Un automate de traitement de données est un dispositif possédant plusieurs états et prévu pour traiter des évènements d'entrée ; dans chacun de ces états, il répond à tout évènement d'entrée en accomplissant une séquence d'opérations de traitement de données prédéterminées, laquelle peut comprendre l'initialisation d'évènements de sortie, dont certains peuvent entraîner le passage de l'automate dans un autre état.

Plus concrètement, un tel automate peut être constitué par un ordinateur doté, entre autre, d'un programme d'automate, lequel comprend une indication d'état pouvant prendre autant de valeurs qu'il y a d'états. Les évènements d'entrée sont des signaux d'origine externe saisis par les moyens d'entrée/sortie de l'ordinateur, ou d'origine interne, créés par programme. Ils se combinent avec l'indication d'état pour engendrer, par l'exécution d'un programme correspondant à chaque combinaison, les évènements de sortie qui sont des signaux transmis à l'extérieurs de l'ordinateur, par ses moyens d'entrée/sortie, ou traités par d'autres programmes de l'ordinateur, certains d'entre eux pouvant causer un changement d'état de l'automate.

Si l'automate doit, par exemple, assurer les fonctions d'analyse et de décision dans une installation téléphonique, l'automate aura autant d'états que le traitement téléphonique le demande (ligne libre, ligne en appel, envoi de la tonalité de numérotation, réception du premier chiffre, etc.). Dans chaque état, les évènements attendus seront non seulement ceux que l'on doit prévoir dans la progression normale de l'établissement d'une communication (envoi des chiffres, disponibilité ou occupation de lignes ou circuits, raccrochage du demandeur ou du demandé), mais aussi tous les événements anormaux ou rares (défaillance d'un organe quelconque, matériel ou logiciel, manque de ressources, rupture intempestive d'un dialogue en cours, etc.). On conçoit que l'on peut arriver à un grand nombre d'états et, dans chacun d'eux, un non moins grand nombre d'événements. L'automate est alors volumineux, donc coûteux à concevoir et développer, tester, maintenir, etc.

Pour améliorer cette situation on a déjà pensé à utiliser non pas un automate, mais plusieurs sous-automates, pouvant être actifs ou non, ainsi qu'un dispositif pour présenter un événement à un automate élémentaire actif, un automate élémentaire actif comprenant des moyens pour activer un autre automate élémentaire et un automate élémentaire actif comprenant des moyens pour désactiver un autre automate élémentaire. On en trouvera un exemple dans le document de brevet EP-A-228 053, ou dans l'article "ITT 1230 Digital Exchange-Software Design for Digital Exchanges" de A. Gardiner et al, Electrical Communication, vol. 54, n° 3, 1979, pages 199-204. Chacun des sous-automates y comporte certains des états de l'ensemble de l'automate, de sorte que le nombre global d'états soit réduit, par exemple en affectant à un seul automate une série d'états apparaissant de façon itérative, parce qu'ils correspondent à une fonction accomplie plusieurs fois au cours du traitement de données. Le nombre d'événements à traiter dans chaque état reste inchangé. De plus, il y a lieu de prévoir des fonctions additionnelles permettant le dialogue entre les automates individuels, ainsi qu'une fonction additionnelle d'aiguillage des événements d'entrée vers l'un ou les automates appropriés. Ces dispositions additionnelles sont coûteuses, en particulier en temps de traitement.

La présente invention vise donc à proposer une structure d'automate de traitement de données qui permette de réduire tant le nombre global des états que le nombre des événements à traiter dans chaque état.

L'automate de traitement de données de la présente invention est caractérisé en ce qu'il comprend des automates élémentaires agencés selon plusieurs niveaux, un dispositif de présentation d'événement répondant à la survenance d'un événement en identifiant un niveau d'automate actif le plus bas et un automate élémentaire actif dans ce niveau d'automate actif le plus bas, pour en conséquence présenter l'événement à cet automate élémentaire actif, un automate élémentaire actif de tout niveau d'automate intermédiaire comprenant des moyens d'activation de niveau inférieur lesquels permettent, en réponse à certains évènements, de rendre actif le niveau d'automate immédiatement inférieur et, dans ce niveau d'automate inférieur, de rendre actif un automate élémentaire inférieur, des moyens de renvoi au niveau supérieur lesquels permettent, en réponse à certains autres évènements, qui ne sont pas traités par ledit automate élémentaire actif, de transférer l'évènement à un automate élémentaire supérieur actif du niveau d'automate immédiatement supérieur au niveau d'automate auquel appartient ledit automate élémentaire actif, ledit automate élémentaire actif comprenant en outre des moyens de désactivation lesquels permettent, en réponse à un évènement particulier, de désactiver l'automate élémentaire considéré et, dans le même temps, de désactiver tout automate élémentaire de niveau d'automate inférieur qui aurait été antérieurement activé par l'intermédiaire de l'automate élémentaire actif considéré.

Les dispositions qui précèdent ajoutent à la réduction du nombre total d'états procurée par l'emploi d'un automate composé de plusieurs automates élémentaires, chaque automate élémentaire étant prévu pour exécuter une sous-fonction, chaque fois que cela est utile, à la demande de l'un quelconque des automates élémentaires activés aux différents niveaux, la possibilité de limiter le nombre d'évènements traités par chacun ou la plupart des automates élémentaires en permettant de prévoir au moins un automate élémentaire spécialisé dans le traitement d'évènements communs, susceptibles de se présenter à tout moment, ou tout au moins souvent, dans le cours du traitement accompli par l'automate, évènements communs dont le traitement devrait sans cela être prévu dans tous ou presque tous les états des automates élémentaires de niveau(x) inférieur(s). La réduction globale du volume de l'automate obtenue grâce à des mises en facteur réalisées à la fois par la création d'automates élémentaires de type sous-programme et par la centralisation dans les niveaux supérieurs des traitements relatifs aux évènements communs permet une simplification de la conception et une réduction des coûts de développement, de validation et de maintenance.

Par ailleurs, ledit automate élémentaire actif, au niveau d'automate actif le plus bas, est celui qui correspond à la sous-fonction en cours d'exécution. Le plus souvent, un évènement survenant appartiendra à cette sous-fonction et devra être traité par cet automate élémentaire actif. L'invention permet, sans aiguillage des évènements entre différents sous-automates, de traiter le plus grand nombre d'entre eux directement par l'automate élémentaire approprié, tandis que les évènements relativement rares n'appartenant pas à la sous-fonction en cours seront traités par des automates élémentaires de niveau(x) supérieur(s). Cela procure une amélioration dans les performances d'exécution du traitement des données.

Selon une autre caractéristique de l'invention, lesdits moyens d'activation permettent de rendre actif, dans ledit niveau d'automate inférieur, un parmi plusieurs automates élémentaires inférieurs, en fonction de l'évènement présenté et/ou de l'état dudit automate élémentaire actif.

Les différents objets et caractéristiques de l'invention seront maintenant exposés de façon plus détaillée dans la description qui va suivre d'un mode de mise en oeuvre de l'invention, qui sera faite en se référant aux figures annexées qui représentent :
- la figure 1, la structure d'un automate de traitement de données conforme à la présente invention, dans le cas du traitement des appels dans un réseau de radiotéléphonie,
- la figure 2, un diagramme illustrant l'enchaînement des sous-fonctions et la présentation des évènements aux automates élémentaires, dans le cas de l'automate de la figure 1, par exemple.

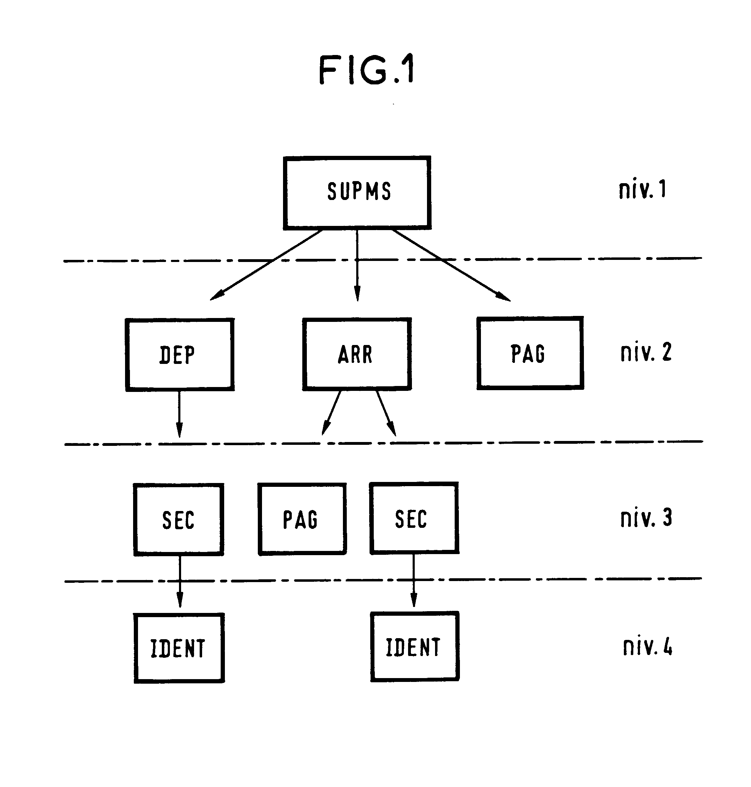

L'automate dont la structure est représenté à la figure 1 est destiné à traiter les appels dans un réseau de radiotéléphonie et, en particulier la partie de ces appels relative aux terminaux mobiles. Cet automate comprend quatre niveaux niv1, niv2, niv3 et niv4.

Le niveau niv1 comprend un seul automate élémentaire SUPMS qui est chargé de la supervision du terminal mobile, dans le traitement d'un appel intéressant ce terminal. Plus précisément, l'automate élémentaire SUPMS traite tous les évènements relatifs à l'état du terminal et/ou de son correspondant conduisant à la libération de l'appel et ce à n'importe quel moment dans le déroulement de l'appel tels que :
- raccrochage du terminal mobile,
- raccrochage du correspondant,
- erreur de protocole de communication entre le terminal mobile et le réseau,
- faute logicielle ou matérielle où que ce soit,
- rupture du dialogue entre le terminal mobile et la station de base avec laquelle il communiquait,
- défaillance du canal radio, etc.

Cet automate élémentaire SUPMS traite aussi les requêtes de transfert de communication, d'une station de base à une autre station de base, suite au déplacement du terminal mobile, qui peuvent bien entendu se présenter à n'importe quel moment au cours de l'appel. Un tel transfert de communication demande la mise en place de nouvelles ressources terrestres et radio, les anciennes étant alors libérées.

Le niveau niv2 comprend trois automates élémentaires, DEP, ARR, PAG. Comme l'indiquent les flèches pointant de l'automate élémentaire SUPMS vers les automates élémentaires DEP, ARR et PAG, l'un des ces derniers automates élémentaires est sélectivement activé par l'automate élémentaire SUPMS.

L'automate élémentaire DEP a pour fonction la supervision de l'établissement d'un appel départ, c'est-à-dire d'un appel provenant d'un terminal mobile desservi par l'automate de la figure 1. Dans ce cadre, il veille à l'authentification du terminal mobile, c'est-à-dire son identification par des moyens de sécurité sur lesquels on reviendra plus loin dans ce texte, il reçoit et analyse la numérotation, détermine l'acheminement de l'appel et met en place les ressources terrestres et radioélectriques, jusqu'à ce que le correspondant demandé passe en phase sonnerie, après quoi il se désactive.

L'automate élémentaire ARR a pour fonction la supervision de l'établissement d'un appel arrivée, c'est-à-dire d'un appel destiné à un terminal mobile desservi par l'automate de la figure 1. Dans ce cadre, il veille à la détermination de la cellule dans laquelle est localisé le terminal mobile, par des moyens qui seront détaillés plus loin, puis à l'authentification du terminal mobile, comme indiqué plus haut, et finalement met en place les ressources terrestres et radioélectriques jusqu'à ce que le terminal mobile demandé passe en phase sonnerie, après quoi il se désactive.

L'automate élémentaire PAG a pour fonction la localisation d'un terminal mobile dans une des cellules d'une zone de localisation. Il est activé par l'automate élémentaire SUPMS dans le cas d'une demande de localisation du mobile provenant d'une commande opérateur. Il se désactive, après avoir rempli sa fonction.

Le niveau niv3 comprend également trois automates élémentaires, dont l'automate PAG déjà rencontré au niveau niv2, ainsi qu'un automate élémentaire SEC qui apparaît deux fois. Cependant, on remarquera qu'ici, l'automate élémentaire PAG est appelé dans le cas d'un besoin de localisation du mobile pour le compte de l'établissement d'un appel arrivée. Cet automate élémentaire SEC est chargé de l'authentification du terminal mobile identifié par son numéro d'identification international d'abonné mobile IMSI (initiales de "International Mobile Subscriber Identification"), supposé connu, puis le chiffrage du canal radio est mis en place, un numéro d'identification temporaire d'abonné mobile TMSI (initiales de "Temporary Mobile Subscriber Identification") est attribué, après quoi l'automate élémentaire SEC se désactive. Si l'authentification échoue, l'automate élémentaire SEC met en oeuvre l'automate élémentaire IDENT lequel, comme on le verra par la suite, obtient le numéro d'identification international IMSI à partir du terminal mobile lui-même, après quoi il procède à nouveau à la séquence d'authentification, pour effectuer ensuite le traitement décrit plus haut.

Le niveau niv4 comprend l'automate IDENT déjà mentionné, utilisable plusieurs fois par l'automate SEC du niveau niv3, tel qu'indiqué plus haut. Sa fonction est de demander le numéro d'identification international IMSI de l'abonné mobile, soit au centre dont dépendait antérieurement le terminal mobile et qu'il a quitté au cours de son déplacement, soit au terminal mobile lui-même, si l'identification ne peut être obtenue du centre précédent. Il se désactive après avoir rempli sa fonction.

Les fonctions que l'on vient de décrire sont bien connues dans la technique radiotéléphonique et l'on renverra au très nombreux documents publiés à ce sujet. On se bornera à illustrer l'utilisation des automates élémentaires dans le cas d'un appel départ et d'un appel arrivée.

Dans le cas d'un appel départ d'un abonné d'un terminal mobile traité par l'automate de la figure 1, l'automate, à la prise en charge de l'appel, notée pca, active le niveau d'automate niv1 et, dans ce niveau niv1, l'automate élémentaire SUPMS. L'automate élémentaire SUPMS supervise l'état de la liaison avec le terminal mobile, constatant qu'il s'agit d'un appel départ, active le niveau d'automate niv2 et, dans ce niveau niv2, l'automate élémentaire DEP. Ce dernier doit d'abord procéder à une authentification de sécurité du terminal mobile. Pour ce faire, il active le niveau d'automate niv3 et, dans celui-ci, l'automate élémentaire SEC. Si nécessaire, pour procéder à l'identification proprement dite, l'automate élémentaire SEC active le niveau d'automate niv4 et, dans celui-ci, l'automate élémentaire IDENT. Lorsque l'identification a eu lieu, l'automate élémentaire IDENT se désactive et le niveau d'automate niv4 est également désactivé ; l'automate élémentaire SEC, au niveau d'automate niv3, reprend le contrôle, met en place le chiffrage du canal radio et, si nécessaire,ré-attribue un numéro d'identification temporaire au terminal mobile. Ensuite, il se désactive lui-même et le niveau d'automate niv3 est également désactivé, de sorte que l'automate élémentaire DEP se charge de recevoir le numéro du correspondant demandé, de l'analyser, de déterminer en conséquence l'acheminement, et de le superviser, jusqu'à ce que ce correspondant, supposé libre, soit mis en sonnerie. Alors, la phase d'établissement d'un appel départ étant terminé, l'automate DEP se désactive et le niveau d'automate niv2 est également désactivé, tandis que la communication n'est plus contrôlée que par l'automate élémentaire SUPMS au niveau niv1, seul actif maintenant.

Dans le cas d'un appel arrivée, l'appel est d'abord supervisé par l'automate élémentaire SUPMS, au niveau niv1 seul actif, puis le niveau niv2 est activé, ainsi que l'automate ARR, afin de superviser la phase d'établissement de l'appel arrivée. Il est d'abord nécessaire de déterminer dans quelle cellule se trouve ce terminal mobile destinataire, ce qui est obtenu par l'activation du niveau 3 et, dans celui-ci de l'automate élémentaire PAG. La localisation effectuée, l'automate PAG se désactive et le niveau niv3 est lui-même désactivé, pour être réactivé immédiatement par l'automate élémentaire ARR qui active alors l'automate élémentaire SEC. On a déjà exposé le rôle de l'automate élémentaire SEC et comment il utilise l'automate élémentaire IDENT, au niveau niv4, pour l'identification du terminal mobile concerné. Ensuite, tout comme déjà décrit, les automates élémentaires IDENT, SEC, ARR, se désactivent l'un après l'autre, de même que les niveaux niv4, niv3, niv2, l'appel arrivée établi étant finalement supervisé par le seul automate élémentaire SUPMS au niveau niv1.

Il reste à mentionner qu'un éventuel transfert de communication demandé par la station radio est un évènement reçu et piloté directement par l'automate élémentaire SUPMS, quel que soit l'état des automates élémentaires éventuellement actifs aux niveaux inférieurs.

On remarquera qu'un même automate élémentaire, SEC par exemple, peut être activé par plusieurs automates élémentaires distincts du niveau supérieur. En d'autres termes, la fonction que remplit cet automate élémentaire se retrouve dans plusieurs phases de traitement de données de l'automate entier et le fait de l'avoir confié à un seul automate élémentaire utilisé dans ces différentes phases apporte une réduction du nombre total d'états de l'automate. On peut en dire autant en ce qui concerne les automates élémentaires IDENT et PAG.

On remarquera aussi qu'un automate élémentaire d'un niveau quelconque peut sélectivement activer plusieurs automates élémentaires du niveau inférieur au sien, pour demander l'exécution de fonctions successives. Cela permet plus facilement le découpage des fonctions et la détermination d'automates élémentaires qui puissent intervenir dans des phases de traitement de données différentes.

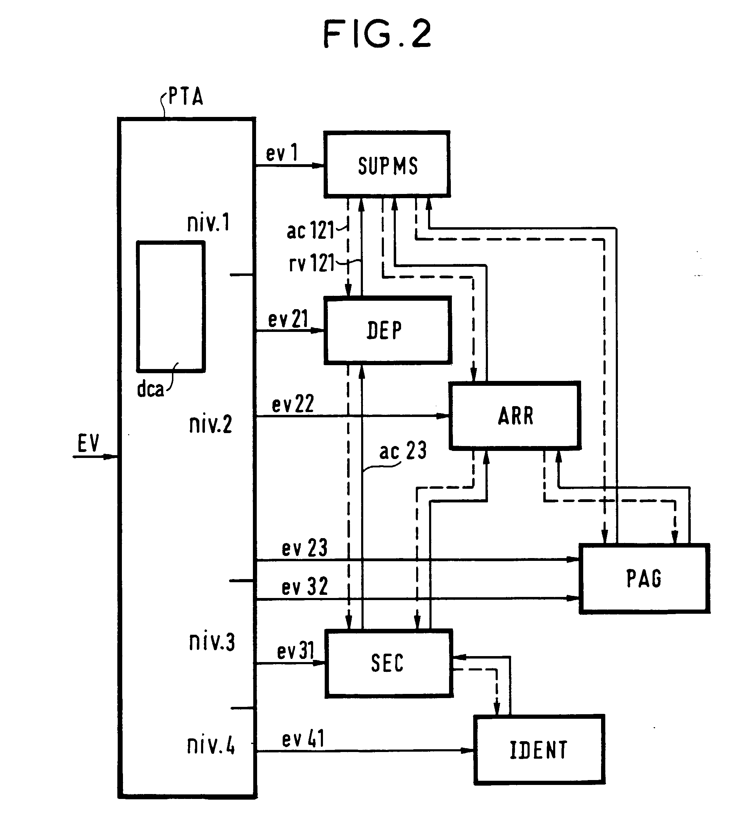

Mais la réduction du nombre d'évènements généralement traités par chaque automate élémentaire provient du mode d'affectation de ces évènements aux automates élémentaires activés, comme il apparaîtra dans la description qui va suivre, faite en se reportant à la figure 2.

La figure 2 représente les flux de circulation des évènements entre les différents automates élémentaires. Un dispositif de présentation d'évènement PTA dit de pré-traitement d'automate reçoit les évènements de l'extérieur, détermine le niveau d'automate le plus bas dans lequel un automate élémentaire est actif et présente l'évènement reçu à cet automate élémentaire. Les liaisons en traits interrompus représentent les fonctions d'activation, tandis que les liaisons en traits pleins représentent les fonctions de transfert d'évènements.

On a exposé plus haut comment étaient activés les différents automates élémentaires. Lorsque l'automate prend en charge un appel, le pré-traitement d'automate active le niveau d'automate niv1 par défaut, aucun autre niveau d'automate étant encore activé, et active l'automate SUPMS qui est le seul défini à ce niveau. Un évènement quelconque EV, soumis au pré-traitement d'automate PTA est alors affecté au niveau d'automate actif niv1 et transmis à l'automate élémentaire actif de ce niveau niv1 qui est l'automate élémentaire SUPMS, ce qui est illustré par la liaison ev1. L'automate SUPMS doit être capable de traiter l'évènement en question. Au cours du traitement, l'automate élémentaire engendre éventuellement des évènements de sortie et change éventuellement d'état. Sur réception d'un évènement particulier signifiant le début d'un appel, l'automate élémentaire SUPMS active l'automate élémentaire approprié, l'automate élémentaire DEP par exemple, ce qui est illustré par la liaison ac121. Les données de contexte d'automate dca sont modifiées pour mémoriser que le niveau niv2 est maintenant actif.

Si le niveau d'automate niv2 est également actif, le pré-traitement d'automate PTA recevant un évènement EV sélectionne ce niveau niv2, de préférence au niveau niv1, et transmet l'évènement reçu à celui des automates élémentaires de ce niveau niv2 qui est actif, soit à l'automate élémentaire DEP, par exemple, ce qui est illustré par la liaison ev21. Trois cas peuvent alors se présenter :
- si l'évènement doit être traité par l'automate élémentaire DEP, le traitement correspondant est accompli, des évènements de sortie éventuels sont engendrés, l'automate DEP change éventuellement d'état ;
- si l'évènement demande l'intervention d'un autre automate élémentaire, de l'automate élémentaire SEC, en l'occurence, celui-ci est activé et, le cas échéant, l'évènement dont il s'agit lui est transmis, ce qui est illustré par la liaison ac23, tandis que les données du contexte d'automate dca sont mises à jour pour mémoriser que le niveau niv3 est maintenant actif ;
- si l'évènement ne fait pas partie de ceux que l'automate élémentaire DEP traite comme on vient de le voir dans les deux cas précédents, il est renvoyé vers l'automate élémentaire (SUPMS) qui a activé l'automate élémentaire considéré (DEP), ce qui est illustré par la liaison rv121.

De la sorte, l'automate élémentaire considéré DEP est prévu pour répondre à une liste limitée d'évènements ayant trait à la fonction qu'il est en charge de remplir. Le traitement de certains évènements spécifiques annonçant le déclenchement d'une sous-fonction est exécuté en activant l'automate élémentaire chargé d'exécuter cette sous-fonction, SEC en l'occurrence, au niveau inférieur niv3, tandis que les évènements autres sont renvoyés vers le niveau d'automate supérieur (niv1) et, dans celui-ci, vers l'automate élémentaire actif (SUPMS), qui est celui qui a activé l'automate élémentaire considéré (DEP). Le traitement effectué par l'automate élémentaire actif du niveau d'automate supérieur peut comprendre la désactivation de l'automate ayant initialement reçu cet évènement.

Ce qui précède s'applique de la même façon dans le cas où l'automate élémentaire actif du niveau d'automate niv2 est l'automate élémentaire ARR. La seule différence est que cet automate élémentaire ARR peut activer sélectivement un parmi plusieurs automates élémentaires (SEC, PAG) du niveau d'automate inférieur. Cela s'applique encore si l'automate élémentaire actif du niveau d'automate niv2 est l'automate PAG, lequel toutefois n'active aucun automate élémentaire d'un niveau inférieur.

Il en va de même lorsque le niveau d'automate niv3 est actif, après les niveaux niv1 et niv2, mais alors que le niveau d'automate niv4 n'est pas actif. Un évènement se présentant alors est transmis, selon l'automate élémentaire actif de ce niveau, soit à l'automate élémentaire SEC (liaison ev31), soit à l'automate élémentaire PAG (liaison ev32).

En supposant qu'un évènement ait ainsi été transmis à l'automate élémentaire SEC, celui-ci répond tout comme les automates du niveau supérieur. On remarquera que, si l'évènement doit être renvoyé vers un automate du niveau d'automate supérieur, niv2, il suffit de le renvoyer vers l'automate élémentaire actif de ce niveau d'automate supérieur pour que ce soit bien celui qui a activé l'automate élémentaire considéré SEC qui reçoive l'évènement en renvoi.

Il en va de même en ce qui concerne l'automate élémentaire PAG, mais plus simplement, car le renvoi vers le niveau d'automate supérieur niv2 ne conduit alors que vers l'automate élémentaire ARR.

On peut en dire autant en ce qui concerne le niveau d'automate niv4 et l'automate IDENT.

Il se peut enfin que l'automate élémentaire d'un niveau intermédiaire ne soit pas lui-même en mesure de traiter un évènement qui lui est renvoyé par un automate élémentaire d'un niveau inférieur au sien. Bien entendu, dans un tel cas, il renvoie à son tour cet évènement vers l'automate élémentaire actif du niveau supérieur au sien.

De la sorte, d'une manière générale, chaque automate élémentaire ne traite que les évènement normalement attendus dans le déroulement de la partie du traitement de données qui lui est attribuée. Cela réduit pratiquement au minimum le nombre d'évènements que chaque automate élémentaire doit traiter. Les avantages que cela procure ont déjà été énoncés. Par ailleurs, ces évènements normalement attendus sont les plus probables et les cas d'évènements devant faire l'objet d'un renvoi sont relativement peu fréquents, de sorte que le mécanisme de renvoi exposé n'est pas coûteux en temps de traitement.

## Revendications

1. Automate de traitement de données comprenant des automates élémentaires pouvant être actifs ou non, ainsi qu'un dispositif pour présenter un événement à un automate élémentaire actif, un automate élémentaire actif comprenant des moyens pour activer un autre automate élémentaire et un automate élémentaire actif comprenant des moyens pour désactiver un autre automate élémentaire, caractérisé en ce que lesdits automates élémentaires (SUPMS, DEP, ARR...) sont agencés selon plusieurs niveaux d'automate (niv1, niv2...), ledit dispositif de présentation d'évènement (PTA) répondant à la survenance d'un événement en identifiant un niveau d'automate actif le plus bas et un automate élémentaire actif dans ce niveau d'automate actif le plus bas, pour en conséquence présenter l'événement à cet automate élémentaire actif, un automate élémentaire actif de tout niveau d'automate intermédiaire comprenant des moyens d'activation de niveau inférieur lesquels permettent, en réponse à certains événements, de rendre actif le niveau d'automate immédiatement inférieur et, dans ce niveau d'automate inférieur, de rendre actif un automate élémentaire inférieur, des moyens de renvoi au niveau supérieur lesquels permettent, en réponse à certains autres événements, qui ne sont pas traités par ledit automate élémentaire actif, de transférer l'événement à un automate élémentaire supérieur actif du niveau d'automate immédiatement supérieur au niveau d'automate auquel appartient ledit automate élémentaire actif, ledit automate élémentaire actif comprenant en outre des moyens de désactivation lesquels permettent, en réponse à un événement particulier, de désactiver l'automate élémentaire considéré et, dans le même temps, de désactiver tout automate élémentaire de niveau d'automate inférieur qui aurait été antérieurement activé par l'intermédiaire de l'automate élémentaire actif considéré.

2. Automate de traitement de données conforme à la revendication 1 caractérisé en ce que lesdits moyens d'activation permettent de rendre actif, dans ledit niveau d'automate inférieur, un parmi plusieurs automates élémentaires inférieurs, en fonction de l'événement présenté et/ou de l'état dudit automate élémentaire actif.

## Patentansprüche

1. Automat zur Bearbeitung von Daten mit Elementarautomaten, die aktiv oder inaktiv sein können, sowie mit einer Vorrichtung, um ein Ereignis einem aktiven Elementarautomaten zu präsentieren, wobei ein aktiver Elementarautomat Mittel, um einen anderen Elementarautomaten zu aktivieren, und Mittel aufweist, um einen anderen Elementarautomaten zu inaktivieren, dadurch gekennzeichnet, daß die Elementarautomaten (SUPMS, DEP, ARR, ...) in mehreren Automatenebenen (niv1, niv2, ...) angeordnet sind und daß die Vorrichtung (PTA) zur Präsentierung eines Ereignisses auf das Auftreten eines Ereignisses reagiert, indem sie eine möglichst tiefe aktive Automatenebene und einen aktiven Elementarautomaten in dieser untersten aktiven Automatenebene identifiziert, um dann das Ereignis diesem aktiven Elementarautomaten zu präsentieren, daß ein aktiver Elementarautomat einer beliebigen Automaten-Zwischenebene Mittel zur Aktivierung der darunterliegenden Ebene, die bei Vorliegen bestimmter Ereignisse die unmittelbar darunterliegende Automatenebene und in dieser unteren Automatenebene einen unteren Elementarautomaten aktivieren können, und Mittel zur Rückgabe an eine höhere Ebene besitzt, die bei Vorliegen bestimmter anderer Ereignisse, die nicht von dem aktiven Elementarautomaten bearbeitet werden, dieses Ereignis an einen aktiven Elementarautomaten der unmittelbar darüberliegenden Automatenebene abgeben, und daß der aktive Elementarautomat weiter Mittel zur Inaktivierung besitzt, die bei einem bestimmten Ereignis den betrachteten Elementarautomaten inaktivieren und zugleich alle Elementarautomaten einer niedrigeren Ebene inaktivieren können, die vorher über den betrachteten aktiven Elementarautomaten aktiviert worden sein könnten.

2. Automat zur Datenbearbeitung nach Anspruch 1, dadurch gekennzeichnet, daß die Aktivierungsmittel in der unteren Automatenebene einen von mehreren unteren Elementarautomaten aktivieren können, je nach dem vorliegenden Ereignis und/ oder dem Zustand des aktiven Elementarautomaten.

## Claims

1. A data processing machine comprising elementary machines which may or may not be active, and a device for presenting an event to an active elementary machine, each active elementary machine comprising means for activating another elementary machine and each active elementary machine comprising means for deactivating another elementary machine, said data processing machine being characterized in that said elementary machines (SUPMS, DEP, ARR, ...) are disposed in a plurality of machine levels (level 1, level 2, ...), said event presentation device (PTA) responding to the arrival of an event by identifying the lowest machine level that is active and by identifying the elementary machine that is active in this lowest active machine level to present the event to said active elementary machine, an active elementary machine at any intermediate machine level comprising lower level activation means making it possible to respond to certain events by activating the next lower machine level and to activate a lower elementary machine in said lower machine level, and means for responding to certain other events that are not processed by said active elementary machine by sending them up to a higher level, thereby enabling an event to be transferred to an active higher elementary machine in the machine level immediately above the machine level to which said active elementary machine belongs, said active elementary machine also including deactivation means enabling it to respond to a particular event by deactivating the elementary machine in question and simultaneously deactivating any elementary machine at a lower machine level that may previously have been activated by the active elementary machine under consideration.

2. A data processing machine according to claim 1, characterized in that said activation means serve to activate a selected one from a plurality of lower elementary machines in said lower machine level as a function of the event presented and/or of the state of said active elementary machine.
